# EUROPÄISCHE PATENTSCHRIFT

(11) **EP 3 174 493 B1**
(45) Veröffentlichungstag und Bekanntmachung des Hinweises auf die Patenterteilung: **07.10.2020**
(21) Anmeldenummer: 15756565.6
(22) Anmeldetag: 31.07.2015
(51) Int. Cl.: A61C 13/00

(54) **VERFAHREN ZUR VIRTUELLEN NACHBEARBEITUNG EINES GINGIVAMODELLS**
METHOD FOR THE VIRTUAL SECONDARY MACHINING OF A GINGIVA MODEL
PROCÉDÉ DE TRANSFORMATION VIRTUELLE D'UN MODÈLE DE GENCIVE

(30) Priorität: 31.07.2014 DE 102014215103
(43) Veröffentlichungstag der Anmeldung: 07.06.2017
(73) Patentinhaber: Sirona Dental Systems GmbH, 64625 Bensheim (DE)
(72) Erfinder: JORDAN, Thorsten, 64319 Pfungstadt (DE)
(74) Vertreter: Özer, Alpdeniz
(86) Internationale Anmeldenummer: PCT/EP2015/067647
(87) Internationale Veröffentlichungsnummer: WO 2016/016423

(56) Entgegenhaltungen:
- WO-A1-2013/120955
- WO-A1-2013/124452
- WO-A1-2014/064165

## Beschreibung

### Technisches Gebiet

Die Erfindung betrifft ein Verfahren zur virtuellen Nachbearbeitung eines bei der Planung einer künstlichen Gingiva erzeugten ersten virtuellen dreidimensionalen Gingivamodells.

### Stand der Technik

Aus dem Stand der Technik sind mehrere Verfahren zur Konstruktion von Zahnersatzteilen bekannt.

Bei der Gestaltung eines dreidimensionalen Modells einer künstlichen Gingiva im Rahmen der Konstruktion einer Vollprothese wird die Form der Gingiva an den Kiefer und an die geplanten Zahnrestaurationen anatomisch sinnvoll angepasst. Bei den bekannten Verfahren zur Herstellung von Vollprothesen wird im ersten Schritt ein Abdruck des zahnlosen Kiefers erstellt und schrittweise ein Gingivamodell in mehreren Schichten eines weichbleibenden Kunststoffs manuell aufgetragen. Anschließend werden die Zahnersatzteile der Zähne relativ zum Gingivamodell angeordnet.

WO 2013/124452 A1 offenbart ein Verfahren zur Konstruktion eines Zahnersatzteils mit einem künstlichen Zahnfleischmodell. Die Konstruktion des Zahnfleischmodells kann mittels einer CAD-Software erfolgen. Die Konstruktion des Zahnersatzteils und des Zahnfleischmodells kann unter Verwendung eines MESH-Modell-Verfahrens konstruiert werden. Dabei wird ein Netz aus Polygonen über das konstruierte 3D-Modell gespannt.

WO 2013/120955 A1 offenbart ein Verfahren zur Konstruktion eines Zahnersatzteils mit einem Zahnmodell und einem Zahnfleischmodell. Dabei wird das bestehende Zahnfleisch des Patienten vermessen und eine digitale 3D-Aufnahme erzeugt. Bei der Konstruktion wird das virtuelle Zahnmodell zur dreidimensionalen Aufnahme des bestehenden Zahnfleisches des Patienten angeordnet und anschließend ein virtuelles Gingivamodell konstruiert. Bei der Konstruktion des virtuellen Gingivamodells werden Strukturen wie Vorsprünge manuell durch einen Benutzer hinzugefügt, indem ein virtuelles Werkzeug verwendet wird. Das verwendete Werkzeug simuliert dabei das bereits bekannte Auftragen von Wachs beim Modellieren solcher Modelle im Zahnlabor. Die genannten Strukturen werden also manuell durch den Benutzer unter Verwendung einer Computermaus Schritt für Schritt, wie beim Formen mit Wachs, nachgebildet. Der Benutzer kann in den Einstellungen des virtuellen Wachs-Werkzeugs den Durchmesser und die Höhe eines Wachstropfens einstellen.

WO 2014/064165 A1 offenbart ein Verfahren zur Konstruktion eines virtuellen Zahnersatzteils, wobei ein subgingivaler Teil des Zahnersatzteils konstruiert wird.

Ein Nachteil dieser Verfahren besteht darin, dass die Konstruktion einer Vollprothese mit einem künstlichen Zahnfleisch auf eine zeitaufwendige Art und Weise in mehreren manuellen Schritten erfolgt.

Die Aufgabe der vorläufigen Erfindung besteht daher darin, ein Verfahren zur virtuellen Nachbearbeitung eines Gingivamodells bereitzustellen, das eine einfachere, schnelle und anatomisch sinnvolle Bearbeitung ermöglicht.

### Darstellung der Erfindung

Die Erfindung betrifft ein Verfahren zur virtuellen Nachbearbeitung eines bei der Planung einer künstlichen Gingiva erzeugten virtuellen dreidimensionalen Gingivamodells gemaß Anspruch 1. Das virtuelle Gingivamodell wird dabei

virtuell nachbearbeitet, indem mindestens eine definierte dreidimensionale Oberflächenstruktur des Gingivamodells mittels eines virtuellen Werkzeugs unter Verwendung eines Computers verändert wird.

Das virtuelle dreidimensionale Gingivamodell ist das Ergebnis der Planung einer künstlichen Gingiva einer Vollprothese oder auch einer Teilprothese. Bei der Planung der Vollprothese oder der Teilprothese wird ein dreidimensionales Modell des Kiefers verwendet, das zahnlos sein kann. Bei einer Teilprothese enthält der Kiefer noch Restzähne, wobei im Bereich der fehlenden Zähne die Gingiva sich zurückbilden kann. In diesen Bereichen wird mit den künstlichen Zähnen auch die künstliche Gingiva der Teilprothese eingesetzt. Das vorliegende Verfahren kann auch bei der Planung einer Implantatbrücke oder einer einfachen Krone verwendet werden in Fällen bei denen es sinnvoll ist, den Zahnersatz mit künstlicher Gingiva zu ergänzen. Das Modell des Kiefers kann beispielsweise mittels einer dentalen Kamera zur dreidimensionalen Vermessung erzeugt werden. Ausgehend vom Modell des Kiefers werden dann die dreidimensionalen Modelle der Zähne in Relation zum Kiefer geplant. Im nächsten Schritt wird das Gingivamodell der künstlichen Gingiva geplant, wobei das Gingivamodell durch eine Gingivagrenze zum bestehenden Kiefer und durch eine Gingivagrenze zu den geplanten Modellen der Zähne definiert wird. Das virtuelle Gingivamodell kann dann unter Verwendung eines computergestützten Analyseverfahrens in mehrere dreidimensionale Oberflächenstrukturen unterteilt werden. Bei der Nachbearbeitung kann der Benutzer dann mittels des virtuellen Werkzeugs unter Verwendung von Eingabemitteln, wie einer Maus oder Tastatur, eine bestimmte Oberflächenstruktur auswählen und beispielsweise bezüglich der Höhe, der Dicke oder des Verlaufs der Gingivagrenze dieser Oberflächenstruktur verändern.

Ein Vorteil dieses Verfahrens besteht darin, dass das Gingivamodell automatisch in anatomisch sinnvolle Oberflächenstrukturen unterteilt wird und gezielt mittels der virtuellen Werkzeuge verändert werden kann. Dadurch ist also eine anatomisch sinnvolle Anpassung des Gingivamodells einfacher zu erreichen als bei einer Anwendung bekannter CAD-Werkzeuge. Denn bei der Anwendung solcher CAD-Werkzeuge kann ein 3D-Modell Punkt für Punkt ohne Berücksichtigung von anatomischen Strukturen verändert werden.

Die definierte Oberflächenstruktur der Gingiva ist ein Zahnzwischenraum, eine Papille eines Zahnes, ein Zahnwurzelgingivabereich, ein Übergangsbereich zwischen dem Gingivamodell und einem Kiefermodell und/oder ein Auslaufbereich zum Ende des Kieferbogens.

Die Oberflächenstruktur kann die Gingiva eines Zahnzwischenraums sein, wobei der Zahnzwischenraum zwischen zwei Zähnen durch eine Gingivagrenze zu einer mesialen Oberfläche eines ersten Zahns und einer distalen Oberfläche eines zweiten Zahns begrenzt ist.

Die Papille eines Zahnes ist durch eine Gingivagrenze zwischen der Gingiva und dem Zahn sowie durch eine umlaufende Kurve um diesen Zahn definiert. Die Gingiva beschreibt meist eine Kurve die nahezu senkrecht von der Zahnoberfläche weggeht und parallel zur Zahnoberfläche weiterverläuft. Dabei weist die Papille typischerweise eine Breite von 2 mm in einer labialen bzw. bukkalen Richtung von der Zahnoberfläche aus gesehen auf. Die Papille weist einen ersten obersten Punkt an einer mesialen Seite und einen zweiten obersten Punkt an einer distalen Seite auf. Die Papille weist auch einen untersten Punkt auf der lingualen bzw. bukkalen Seite auf. Eine Höhe der Papille zwischen einem der beiden obersten Punkte und dem untersten Punkt entlang einer Zahnachse des jeweiligen Zahns beträgt typischerweise 4 mm.

Der Zahnwurzelgingivabereich schließt sich an die Papille dieses Zahns an, wobei der Zahnwurzelgingivabereich durch einen aufgedickten Bereich der Gingiva um die Zahnwurzel definiert ist. Mittels des computergestützten Verfahrens können diese Aufdickungen um die Zahnwurzeln automatisch erkannt werden, indem der Verlauf des Gingivamodells analysiert wird.

Der Übergangsbereich vom Kiefer auf die Gingiva ist im Grenzbereich der Gingivagrenze zwischen dem geplanten Gingivamodell und dem bestehenden Kiefer angeordnet. Der Übergangsbereich sollte so gestaltet werden, dass beim Aufsetzen der Vollprothese die künstliche Gingiva fließend mit der bestehenden Gingiva des Kiefers abschließt.

Der Auslaufsbereich zum Ende des Kieferbogens hin wird durch die distale Oberfläche des letzten Backenzahns begrenzt und verläuft bis zur Grenze des Gingivamodells.

Die restlichen Bereiche des Gingivamodells können als eine zusammenhängende Oberflächenstruktur mittels des virtuellen Werkzeugs ausgewählt werden und beispielsweise zwecks Kieferaufdickung variiert werden, wobei die Dicke der gesamten restlichen Bereiche erhöht oder vermindert wird.

Durch die Anwendung des virtuellen Werkzeuges wird die definierte Oberflächenstruktur des Gingivamodells gezielt variiert.

Dadurch wird eine anatomisch sinnvolle Anpassung des Gingivamodells ermöglicht.

Durch die Anwendung des virtuellen Werkzeugs kann eine Höhe und ein Verlauf einer Gingivagrenze mindestens eines Zahnzwischenraums verändert werden.

Durch die Anwendung des virtuellen Werkzeugs kann also die Höhe bzw. der höchste Punkt des Zahnzwischenraums parallel zu einer Zahnachse der benachbarten Zähe verschoben werden. Ein anatomisch typischer Höhenunterschied des Zahnzwischenraums zwischen einem untersten Punkt und einem höchsten Punkt entlang der Zahnachse eines der benachbarten Zähne beträgt typischer Weise höchstens 4 mm. Beim Verändern der Höhe kann der Verlauf der Gingivagrenze zu den benachbarten Zähnen automatisch in einer anatomisch sinnvollen Art und Weise angepasst werden. Der Verlauf der Oberfläche des Zahnzwischenraumes wird ebenfalls zu den umliegenden Bereichen angepasst. Der Benutzer kann beispielsweise den höchsten Punkt des Zahnzwischenraumes entlang der Zahnachse eines der beiden Nachbarzähne verschieben, wobei die Bereiche des Zahnzwischenraumes um diesen höchsten Punkt membranartig verformt werden.

Durch die Anwendung des virtuellen Werkzeugs kann eine Höhe und ein Verlauf einer Gingivagrenze mindestens einer Papille verändert werden.

Beim Verändern der Höhe der Papille kann beispielsweise der unterste Punkt entlang der Zahnachse des jeweiligen Zahns verschoben werden, wobei der Verlauf der Gingivagrenze zum Zahn entsprechend angepasst wird.

Durch die Anwendung des virtuellen Werkzeugs wird eine Gingivagrenze einer Papille so verändert, dass ein unterster Punkt der Papille in einer lingualen, bukkalen, labialen oder palatinalen Richtung verschoben.

Der unterste Punkt der Papille kann also mittels des virtuellen Werkzeugs verschoben werden, wobei der Verlauf der Gingivagrenze sowie die Oberfläche der Papille an die umgebenden Bereiche des Gingivamodells angepasst werden.

Durch die Anwendung des virtuellen Werkzeugs wird eine Gingivagrenze einer Papille so verändert, dass ein oberster Punkt der Papille in einer okklusalen, inzisalen oder zervikalen Richtung verschoben wird.

Dadurch wird der oberste Punkt der Papille an einem der beiden Enden in eine okklusale, inzisale oder zervikale Richtung verschoben, wobei die Übergänge zu den benachbarten Oberflächenstrukturen des Gingivamodells angepasst werden.

Vorteilhafterweise kann die Oberflächenstruktur des Gingivamodells computergestützt automatisch durch die Anwendung eines Analyseverfahrens definiert werden.

Dadurch wird das Gingivamodell automatisch in verschiedene Oberflächenstrukturen unterteilt, die eine anatomisch sinnvolle Anpassung erlauben.

Vorteilhafterweise kann die Oberflächenstruktur mittels des virtuellen Werkzeugs ausgewählt werden, wobei diese Oberflächenstruktur graphisch hervorgehoben werden kann, indem ihre Farbe oder ihre Transparenz verändert werden kann.

Dadurch wird die ausgewählte Oberflächenstruktur graphisch hervorgehoben, so dass es für den Benutzer auf eine einfache Art und Weise ersichtlich ist, welche Oberflächenstruktur momentan nachbearbeitet wird.

### Kurzbeschreibung der Zeichnungen

Die Erfindung wird anhand der Zeichnungen erläutert. Es zeigt, die
- Fig. 1: eine Skizze zur Verdeutlichung des vorliegenden Verfahrens; die
- Fig. 2: eine Skizze zur Verdeutlichung der Anwendung eines ersten virtuellen Werkzeugs; die
- Fig. 3: eine Skizze zur Verdeutlichung der Anwendung eines weiteren virtuellen Werkzeugs.

### Ausführungsbeispiele

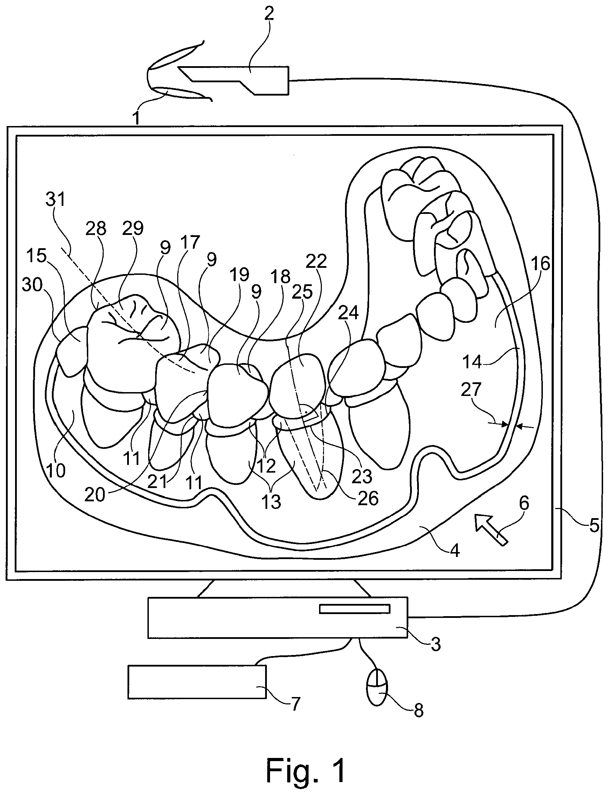

Die Fig. 1 zeigt eine Skizze zur Verdeutlichung des vorliegenden Verfahrens. In einem ersten Schritt wird die Zahnsituation eines zahnlosen Kiefers 1 mittels einer optischen dreidimensionalen dentalen Kamera 2 aufgenommen. Die dentale Kamera kann beispielsweise auf einem Projektionsverfahren basieren. Die erzeugten Bilddaten der Kamera 2 werden an einen Computer 3 übermittelt. Ein Kiefermodell 4 des zahnlosen Kiefers 1 wird mittels einer Anzeigevorrichtung 5, wie eines Monitors, angezeigt. Der Benutzer, wie ein Zahnarzt oder ein Zahntechniker, kann über einen Cursor 6 mittels der Eingabegeräte, wie eine Tastatur 7 oder einer Maus 8, innerhalb des Kiefermodells 4 navigieren. Im nächsten Schritt werden Zahnmodelle 9 der künstlichen Zähne in ihrer Form und in ihrer Anordnung relativ zum Kiefermodell 4 geplant. Im nächsten Schritt wird ein virtuelles dreidimensionales Gingivamodell 10 geplant, wobei die Form und die Anordnung des Kiefermodells 4 und der geplanten Zahnmodelle 9 berücksichtigt werden.

Nach der Planung des Gingivamodells 10 beginnt das Verfahren der vorliegenden Erfindung, wobei das Gingivamodell 10 virtuell nachbearbeitet wird. Die Nachbearbeitung erfolgt indem das Gingivamodell 10 in mehrere Oberflächenstrukturen, wie einen Zahnzwischenraum 11, eine Papille 12, einen Zahnwurzelgingivabereich 13, einen Übergangsbereich 14 im Randbereich zwischen dem Gingivamodell 10 und dem Kiefermodell 4 oder einen Auslaufbereich 15 am Ende des Kieferbogens hin, unterteilt wird. Die restlichen Bereiche 16 des Gingivamodells 10 können ebenfalls als eine einheitliche Oberflächenstruktur zusammengefasst werden und beispielsweise in der Dicke variiert werden. Die einzelnen Oberflächenstrukturen 11, 12, 13, 14, 15 und 16 können also einzeln ausgewählt werden und beispielsweise bezüglich der Höhe, der Dicke oder des Verlaufs der Gingivagrenze dieser Oberflächenstruktur verändert werden. Ein Zahnzwischenraum 11 liegt zwischen zwei benachbarten Zahnmodellen 17 und 18, wobei der Zahnzwischenraum 11 durch eine Gingivagrenze zu einer mesialen Oberfläche 19 zur Mitte des Zahnbogens hin des ersten Zahnmodells 17 und durch eine Gingivagrenze zu einer distalen Oberfläche 20 des zweiten Zahnmodells 18 zum Ende des Zahnbogens hin begrenzt wird. Der Zahnzwischenraum wird seitlich durch eine bogenförmige Grenzlinie 21 begrenzt.

Die Papille 12 eines Zahnmodells 22 ist durch eine umlaufende Kurve 23 um dieses Zahnmodell 22 begrenzt, wobei der Verlauf der Papille 12 typischerweise in einer Ebene 24 nahezu senkrecht zu einer Zahnachse 25 des Zahnmodells 22 beginnt und weiter nahezu parallel zur Oberfläche des Zahns weiterverläuft.

Der Zahnwurzelgingivabereich 13 schließt sich unmittelbar an die Papille 12 eines Zahns an und liegt über einer verdeckten Zahnwurzel 26. Mittels eines computergestützten Analyseverfahrens kann eine über der Zahnwurzel 26 angeordnete Aufdickung der Gingiva erkannt werden, indem der Verlauf des Gingivamodells 10 analysiert wird und diese Aufdickung als eine Erhöhung im Vergleich zum ebenen Verlauf des Gingivamodells in den restlichen Bereichen 16 zwischen den Zahnwurzelgingivabereichen 13 erkannt wird. Diese Aufdickung wird dann als ein Zahnwurzelgingivabereich 13 definiert.

Der Übergangsbereich 14 im Randbereich des Gingivamodells 10 zum bestehenden Kiefermodell 4 kann definiert werden, indem beispielsweise ein Randbereich des Gingivamodells 10 mit einer Breite 27 von 2 mm definiert wird. Der Übergangsbereich 15 am Kieferende wird durch eine distale Oberfläche 28 eines letzten Backenzahns 29 definiert und verläuft bis zu einer seitlichen Gingivagrenze 30 des Gingivamodells entlang einer Kieferachse 31.

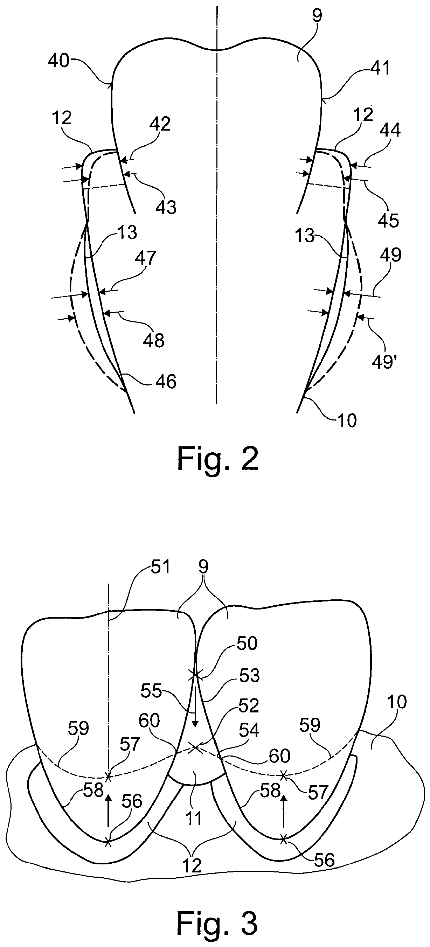

Die Fig. 2 zeigt eine Skizze zur Verdeutlichung der Anwendung des virtuellen Werkzeugs. Ein Zahnmodell 9 sowie das Gingivamodell 10 sind in einer Schnittansicht senkrecht zu der Kieferachse 31 aus Fig. 1 dargestellt. Durch die Verwendung eines ersten virtuellen Werkzeugs wird eine Papille 11 auf einer bukkalen Seite 40 und auf einer palatinalen Seite 41 des Zahnmodells ausgewählt. Anschließend wird die Dicke der Papille 12 verringert, so dass an der bukkalen Seite 40 die Papille ausgehend von einer ersten Dicke 42 bis zu einer veränderten Dicke 43 verringert wird, wobei der Verlauf der Papille nach der Anwendung des virtuellen Werkzeugs gestrichelt dargestellt ist. Die Papille 12 an der palatinalen Seite 41 wird ausgehend von einer Dicke 44 bis zu einer veränderten Dicke 45 verringert, wobei die veränderte Papille gestrichelt dargestellt ist.

Unter Verwendung eines zweiten virtuellen Werkzeugs wird ein Zahnwurzelgingivabereich 13, der als eine Aufdickung im Vergleich zum ebenen Verlauf 46 der restlichen Bereiche 16 zwischen den Zahnwurzelgingivabereichen 13 erkennbar ist, in seiner Dicke verändert. Dabei wird an der bukkalen Seite 40 die Dicke ausgehend von einer ersten Dicke 47 bis zu einer zweiten veränderten Dicke 48 erhöht, wobei der veränderte Zahnwurzelgingivabereich 13 gestrichelt dargestellt ist. Der gegenüberliegende Zahnwurzelgingivabereich 13 an der palatinalen Seite 41 wird entsprechend verändert, wobei die Dicke ausgehend von einer ersten Dicke 49 bis zu einer zweiten veränderten Dicke 49' erhöht wird, wobei der veränderte Zahnwurzelgingivabereich gestrichelt dargestellt ist. Auf diese Weise ermöglicht das vorliegende Verfahren das Gingivamodell 10 in wenigen Schritten anatomisch sinnvoll zu verändern.

Die Fig. 3 zeigt eine Skizze zur Verdeutlichung der Anwendung eines weiteren virtuellen Werkzeugs. Die beiden Zahnmodelle 9 sowie ein Ausschnitt des Gingivamodells 10 sind in einer Ansicht aus einer labialen Richtung dargestellt. Durch die Anwendung eines dritten virtuellen Werkzeugs wird ein höchster Punkt 50 des Zahnzwischenraums 11 entlang einer Zahnachse 51 eines der beiden Zahnmodelle 9 zu einem veränderten höchsten Punkt 52 verschoben, wobei der Verlauf der Gingivagrenze 53 des Zahnzwischenraums 11 automatisch an die umgebenden Bereiche angepasst wird. Der veränderte Verlauf 54 der Gingivagrenze des Zahnzwischenraums 11 ist gestrichelt dargestellt. Die Verschiebung des höchsten Punkt 50 zu dem veränderten höchsten Punkt 52 ist durch einen Pfeil 55 dargestellt. Durch die Anwendung eines vierten virtuellen Werkzeugs wird ein unterster Punkt 56 der Papille 12 eines der beiden Zahnmodelle 9 zu einem veränderten untersten Punkt 57 verschoben, wobei der Verlauf einer Gingivagrenze 58 der Papille 12 entsprechend angepasst wird. Die veränderte Gingivagrenze 59 der veränderten Papille ist gestrichelt dargestellt. Die Verläufe der Gingivagrenzen 54 und 59 innerhalb des Zahnzwischenraums 11 und der Papille 12 werden also automatisch so angepasst, dass zwischen dem Zahnzwischenraum 11 und der Papille 12 in den Übergangsbereichen 60 ein fließender und stetiger Übergang entsteht. Dadurch ermöglich die Anwendung dieser speziellen virtuellen Werkzeuge eine zielgerichtete und eine anatomisch sinnvolle Anpassung des Gingivamodells in wenigen Schritten.

### Bezugszeichen

- 1: zahnloser Kiefer
- 2: optische dreidimensionale dentale Kamera
- 3: Computer
- 4: Kiefermodell
- 5: Anzeigevorrichtung
- 6: Cursor
- 7: Tastatur
- 8: Maus
- 9: Zahnmodell
- 10: Gingivamodell
- 11: Zahnzwischenraum
- 12: Papille
- 13: Zahnwurzelgingivabereich
- 14: Übergangsbereich
- 15: Auslaufbereich
- 16: restliche Bereiche
- 17: Zahnmodell
- 18: Zahnmodell
- 19: mesiale Oberfläche
- 20: distale Oberfläche
- 21: bogenförmige Grenzlinie
- 22: Zahnmodell
- 23: Kurve
- 24: Ebene
- 25: Zahnachse
- 26: Zahnwurzel
- 27: Breite
- 28: distale Oberfläche
- 29: Backenzahn
- 30: seitliche Gingivagrenze
- 31: Kieferachse
- 40: bukkale Seite
- 41: palatinale Seite
- 42: Dicke
- 43: Dicke
- 44: Dicke
- 45: Dicke
- 46: ebener Verlauf
- 47: Dicke
- 48: Dicke
- 49: Dicke
- 50: höchster Punkt
- 51: Zahnachse
- 52: veränderter höchster Punkt
- 53: Verlauf der Gingivagrenze
- 54: veränderter Verlauf
- 55: Pfeil
- 56: unterster Punkt
- 57: veränderter unterster Punkt
- 59: Gingivagrenze
- 60: Übergangsbereich

## Patentansprüche

1. Verfahren zur virtuellen Nachbearbeitung eines bei der Planung einer künstlichen Gingiva erzeugten virtuellen dreidimensionalen Gingivamodells (10), wobei das virtuelle Gingivamodell (10) virtuell nachbearbeitet wird, indem mindestens eine definierte dreidimensionale Oberflächenstruktur (11, 12, 13, 14, 15, 16) des Gingivamodells mittels eines virtuellen Werkzeugs unter Verwendung eines Computers (3) verändert wird, **dadurch gekennzeichnet, dass** die definierte Oberflächenstruktur der Gingiva ein Zahnzwischenraum (11), eine Papille (12) eines Zahnes, ein Zahnwurzelgingivabereich (13), ein Übergangsbereich (14) zwischen dem Gingivamodell (10) und einem Kiefermodell (4) und/oder ein Auslaufbereich (15) zum Ende des Kieferbogens ist, wobei durch die Anwendung des virtuellen Werkzeuges die definierte Oberflächenstruktur (11, 12, 13, 14, 15, 16) des Gingivamodells (10) gezielt variiert wird, wobei durch die Anwendung des virtuellen Werkzeugs eine Höhe (55) und ein Verlauf einer Gingivagrenze (53) mindestens eines Zahnzwischenraums (11) verändert wird, indem ein höchster Punkt (50) des Zahnzwischenraumes (11) entlang einer Zahnachse eines der beiden Nachbarzähne verschoben wird und Bereiche des Zahnzwischenraumes (11) um diesen höchsten Punkt (50) automatisch membranartig angepasst werden, durch die Anwendung des virtuellen Werkzeugs eine Gingivagrenze (58) einer Papille (12) verändert wird, indem ein unterster Punkt (56) der Papille (12) in einer lingualen, bukkalen, labialen oder palatinalen Richtung verschoben wird und der Verlauf der Gingivagrenze (58) relativ zu einem Zahn (9) und zu umgebenden Bereichen des Gingivamodells (10) automatisch angepasst wird oder durch die Anwendung des virtuellen Werkzeugs eine Gingivagrenze (58) einer Papille (12) verändert wird, indem ein oberster Punkt der Papille (12) in einer okklusalen, inzisalen oder zervikalen Richtung verschoben wird und Übergänge der Papille (12) zu benachbarten Oberflächenstrukturen des Gingivamodells (10) automatisch angepasst werden.

2. Verfahren nach Anspruch 1, **dadurch gekennzeichnet, dass** die Oberflächenstruktur (11, 12, 13, 14, 15, 16) des Gingivamodells (10) computergestützt automatisch durch die Anwendung eines Analyseverfahrens definiert wird.

3. Verfahren nach Anspruch 1 oder 2, **dadurch gekennzeichnet, dass** die Oberflächenstruktur (11, 12, 13, 14, 15, 16) mittels des virtuellen Werkzeugs ausgewählt wird, wobei diese Oberflächenstruktur graphisch hervorgehoben wird, indem ihre Farbe oder ihre Transparenz verändert wird.

## Claims

1. A method for the virtual secondary machining of a virtual three-dimensional gingiva model (10) generated during the planning of an artificial gingiva, the virtual gingiva model (10) being subjected to virtual secondary machining in that at least one defined three-dimensional surface structure (11, 12, 13, 14, 15, 16) of the gingiva model is changed by means of a virtual tool using a computer (3), **characterised in that** the defined surface structure of the gingiva comprises an interdental space (11), a papilla (12) of a tooth, a tooth root gingiva region (13), a transition region (14) between the gingiva model (10) and a jaw model (4) and/or a discharge region (15) at the end of the mandibular arch, the defined surface structure (11, 12, 13, 14, 15, 16) of the gingiva model (10) being selectively varied by use of the virtual tool, with a height (55) and a course of a gingival border (53) of at least one interdental space (11) being changed by use of the virtual tool by displacing a highest point (50) of the interdental space (11) along a tooth axis of one of the two neighbouring teeth and by automatically adjusting regions of the interdental space (11) around this highest point (50) in a membrane-like manner, with a gingival border (58) of a papilla (12) being changed by the use of the virtual tool by displacing a lowermost point (56) of the papilla (12) in a lingual, buccal, labial or palatal direction and by automatically adjusting the course of the gingival border (58) relative to a tooth (9) and to the surrounding regions of the gingiva model (10), or with a gingival border (58) of a papilla (12) being changed by use of the virtual tool by displacing an uppermost point of the papilla (12) in an occlusal, incisal or cervical direction and by automatically adjusting transitions of the papilla (12) to adjacent surface structures of the gingiva model (10).

2. The method according to claim 1, **characterised in that** the surface structure (11, 12, 13, 14, 15, 16) of the gingiva model (10) is automatically defined in a computer-assisted manner by using an analysis method.

3. The method according to claim 1 or 2, **characterised in that** the surface structure (11, 12, 13, 14, 15, 16) is selected using the virtual tool, this surface structure being highlighted graphically by changing its colour or its transparency.

## Revendications

1. Procédé de traitement ultérieur virtuel, lors de la planification d'une gencive artificielle, d'un modèle de gencive (10) tridimensionnel virtuel généré , dans lequel le modèle de gencive (10) virtuelle est virtuellement traité ultérieurement de telle sorte qu'au moins une structure de surface (11, 12, 13, 14, 15, 16) tridimensionnelle définie du modèle de gencive est modifiée au moyen d'un outil virtuel à l'aide d'un ordinateur (3), **caractérisé en ce que** la structure de surface définie de la gencive est un espace interdentaire (11), une papille (12), une zone gingivale de racine dentaire (13), une zone de transition (14) entre le modèle de gencive (10) et un modèle de mâchoire (4) et/ou une zone de sortie (15) à l'extrémité de l'arc de la mâchoire, dans lequel, à l'aide de l'outil virtuel, la structure de surface (11, 12, 13, 14, 15, 16) définie du modèle de gencive (10) varie de manière ciblée, dans lequel, à l'aide de l'outil virtuel, une hauteur (55) et un parcours de bordure gingivale (53) d'au moins un espace interdentaire (11) est modifié de telle sorte qu'un point supérieur (50) de l'espace interdentaire (11) est déplacé le long d'un axe dentaire de l'une des deux dents voisines et des zones de l'espace interdentaire (11) audit point supérieur (50) sont automatiquement ajustées d'une manière semblable à une membrane, à l'aide de l'outil virtuel, une limite gingivale (58) d'une papille (12) est modifiée de telle sorte qu'un point inférieur (56) de la papille (12) est déplacé dans une direction linguale, buccale, labiale ou palatine et le parcours de la frontière gingivale (58) est automatiquement ajusté par rapport à une dent (9) et aux zones environnantes du modèle de gencive (10) ou, à l'aide de l'outil virtuel, une limite gingivale (58) d'une papille (12) est modifiée de telle sorte qu'un point supérieur de la papille (12) est déplacé dans une direction occlusale, incisive ou cervicale et des transitions de la papille (12) sont automatiquement ajustées par rapport aux structures de surface voisines du modèle de gencive (10).

2. Procédé selon la revendication 1, **caractérisé en ce que** la structure de surface (11, 12, 13, 14, 15, 16) du modèle de gencive (10) est définie automatiquement de manière assistée par ordinateur à l'aide d'un procédé d'analyse.

3. Procédé selon la revendication 1 ou 2, **caractérisé en ce que** la structure de surface (11, 12, 13, 14, 15, 16) est sélectionnée au moyen de l'outil virtuel, dans lequel ladite structure de surface est mise en évidence graphiquement de telle sorte que sa couleur ou sa transparence est modifiée.
